# EUROPÄISCHE PATENTSCHRIFT

(11) **EP 1 991 644 B1**
(45) Veröffentlichungstag und Bekanntmachung des Hinweises auf die Patenterteilung: **03.08.2011**
(21) Anmeldenummer: 06841475.4
(22) Anmeldetag: 19.12.2006
(51) Int. Cl.: C10M 111/02, B29C 33/60

(54) **FLÜSSIGES TRENNMITTEL**
LIQUID RELEASE AGENT
AGENT DE SEPARATION LIQUIDE

(30) Priorität: 03.03.2006 DE 102006009940
(43) Veröffentlichungstag der Anmeldung: 19.11.2008
(73) Patentinhaber: Riepe, Hans, 32257 Bünde (DE); Riepe, Angelika, 32257 Bünde (DE)
(72) Erfinder: Riepe, Hans, 32257 Bünde (DE); Riepe, Angelika, 32257 Bünde (DE)
(74) Vertreter: Dantz, Jan Henning
(86) Internationale Anmeldenummer: PCT/EP2006/069938
(87) Internationale Veröffentlichungsnummer: WO 2007/101489

(56) Entgegenhaltungen:
- DE-B3- 10 343 441
- DE-U1- 20 314 849
- US-A- 3 424 849
- US-A- 4 155 770
- US-A- 4 781 757

## Beschreibung

Die Erfindung betrifft die Verwendung eines flüssigen Trennmittels zum Auftragen insbesondere auf den mittels eines Klebers oder mittels Leim mit einer Beschichtung versehenen oder zu versehenden Kantenbereich einer Platte, vorzugsweise einer Möbelplatte.

Die Verwendung eines derartigen Trennmittel ist aus der DE 203 14 849 U1 bekannt. Dem Grundsatz nach hat sich dieses Trennmittel in der Praxis durchaus bewährt.

Dabei wird durch dieses Trennmittel ein Anhaften von Klebstoff oder Leimresten an der Möbelplatte verhindert, wenn deren Kante mit einem Kantenband beschichtet wird.

Allerdings sind Anwendungsbereiche bekannt geworden, in denen das bekannte Trennmittel nicht zu einem optimalen Ergebnis führt.

Daneben kann der Einsatz des bekannten Trennmittels aufgrund des relativ hohen Anteils an niedrig siedendem Spezialbenzin als Lösemittel zu gesundheitlichen Beeinträchtigungen führen, insbesondere dann, wenn wie vielfach häufig im Einlaufbereich einer Kantenbearbeitungsmaschine, keine ausreichende Absaugung vorhanden ist.

Auch hinsichtlich des Arbeitsablaufs steht das bekannte Trennmittel einer Optimierung entgegen, da durch den hohen Anteil an Spezialbenzin auf der mit dem Trennmittel benetzten Möbelplatte Verdunstungsränder entstehen, die nur mit erheblichem Arbeitsaufwand entfernbar sind. Da es sich bei den zu bearbeitenden Möbelplatten um Serienteile handelt, die in großen Stückzahlen hergestellt werden, kommt diesem Nachteil eine besondere Bedeutung zu, vor allem in Bezug auf sich daraus ergebende hohe Nacharbeitskosten.

Der Erfindung liegt die Aufgabe zugrunde, ein Trennmittel so weiterzuentwickeln, dass seine Verwendungsfähigkeit verbessert wird.

Diese Aufgabe wird durch die Verwendung eines Trennmittels mit den Merkmalen des Anspruchs 1 gelöst.

Die vorzugsweise Ethanollösung besteht aus Ethanol und einem niedrigsiedenden Spezialbenzin mit einer Verdunstungszahl von 6 - 10, vorzugsweise von 6 - 8. Diese Verdunstungszahl weist auch das Ethanol auf.

Dabei hat sich herausgestellt, dass der Anteil des niedrigsiedenden Spezialbenzins bei ≦ 10 % eine bevorzugte alkoholische Lösung bzw. Ethanollösung ergibt, die selbst in dem Trennmittel in einer Konzentration von 85 % - 99 % vorliegt, während das Weißöl als Trägerfluid dann in einer Konzentration von 15 % bis 1 % vorhanden ist.

Neben einer sehr guten Verwendungsfähigkeit, bietet das neue Trennmittel eine ganze Reihe weiterer Vorteile. So ist das Trennmittel mit dem Bestandteil Ethanollösung nicht gesundheitsgefährdend (Xn, gemäß dem Sicherheitsdatenblatt 91/155/EWG) nicht umweltschädlich (N) und verursacht keine Hautreizung (R 38).

Das vielfache Fehlen einer Absaugung im Einlaufbereich der Beschichtungseinrichtung führt somit nicht zu gesundheitlichen Beeinträchtigungen, wobei selbst ein Einatmen der Umgebungsluft gänzlich unproblematisch für das Personal ist. Vor allem resultiert dies aus dem geringen Anteil von Spezialbenzin, der bei ≦ 10 % liegt

Zweckmäßigerweise erfolgt der Auftrag des Trennmittels durch Feindüsen, die im Einlaufbereich der Beschichtungseinrichtung angeordnet sind.

Die untere Explosionsgrenze erhöht sich von bislang 0,9 Vol. % auf 2,6 Vol.%, wodurch eine wesentliche Verbesserung der Sicherheit gegeben ist. Dadurch kann der Auftrag des Trennmittels mit weniger Luft erfolgen, wenn dies mittels einer Zerstäuberdüse auf den Kantenbereich der Platte aufgebracht wird.

Dies hat insofern Aufwirkungen auf den Betriebsablauf insgesamt, als eine größere Sicherheit bei einer eintretenden Veränderung der Luft- oder Trennmittelzüfuhr gegeben ist, d.h., die Luft- oder Trennmittelzufuhr muss nicht in so engen Grenzen wie bislang erfolgen, um eine Explosionsgefahr auszuschließen.

Darüber hinaus liegt die Zündtemperatur des neuen Trennmittels bei etwa 425°C, während sie bislang bei etwa 250°C lag, wodurch sich naturgemäß ebenfalls eine Verbesserung der Betriebssicherheit, insbesondere hinsichtlich der verminderten Explosionsgefahr ergibt.

Wie sich überraschend gezeigt hat, führt das neue Trennmittel auch zu einer Belastungsreduzierung der Produktionsanlage, in der das Trennmittel zum Einsatz kommt. Da nämlich eine Beschädigung von insbesondere aus entsprechenden Kunststoffen oder Gummi bestehenden oder damit bestückten Bauteilen der Produktionsanlage nicht mehr gegeben ist.

Der genannte geringe Anteil an Spezialbenzin hinterlässt beim Verdunsten keine Verdunstungsränder, so dass auf ein nachfolgendes Reinigen der Möbelplatte verzichtet werden kann, was naturgemäß eine nicht unerhebliche Kosteneinsparung zur Folge hat.

Trotzdem bleibt der gewünschte Effekt des Trennmittels uneingeschränkt erhalten, d.h., es wird ebenso wie bei dem in der Beschreibungseinleitung genannten bekannten Trennmittel wirksam verhindert, dass beim Kantenbeschichten der Platte austretender Leim oder Kleber auf dem zuvor mit dem Trennmittel benetzten Kantenbereich der Platte anhaftet, so dass die Leim- oder Klebstoffreste auf einfache Art und Weise entfernbar sind.

Dies trifft gleichermaßen auf die Entfernung von bei einer nachfolgenden Kantenbearbeitung anfallenden Spänen zu, insbesondere Frässpänen, deren Anhaften dadurch verhindert wird, dass die alkoholische Lösung bis zum Anfall der Späne verdunstet ist, während das Weißöl in einer zu geringen Menge vorliegt, um die Späne zu binden.

Im übrigen kann das als Trennfluid eingesetztes Weißöl aus einem medizinischen oder einem technischen Weißöl bestehen, das in jedem Fall ungiftig ist und keine gesundheitliche Gefährdung für die Personen darstellt, die das Trennmittel verwenden.

## Patentansprüche

1. Verwendung eines flüssigen Trennmittels, enthaltend ein Weißöl als Trägerfluid sowie eine alkoholische Lösung, zum Auftragen auf den mittels eines Klebers oder mittels Leim mit einer Beschichtung versehenen oder zu fersehenden Kantenbereich einer Platte, vorzugsweise einer Möbelplatte.

2. Verwendung nach Anspruch 1, **dadurch gekennzeichnet, dass** die alkoholische Lösung aus einer Ethanollösung besteht.

3. Verwendung nach Anspruch 1 oder 2, **dadurch gekennzeichnet, dass** die alkoholische Lösung aus niedrigsiedendem Spezialbenzin und Alkohol besteht.

4. Verwendung nach einem der vorhergehenden Ansprüche, **dadurch gekennzeichnet, dass** die alkoholische Lösung aus niedrigsiedendem Spezialbenzin und Ethanol besteht.

5. Verwendung nach einem der vorhergehenden Ansprüche, **dadurch gekennzeichnet, dass** das Weißöl aus einem medizinischen oder einem technischen Weißöl besteht.

## Claims

1. Use of a liquid release agent comprising a white oil as carrier fluid and also comprising an alcoholic solution, for application to the edge region, which is provided or is to be provided with a coating by means of an adhesive or glue, of a panel, preferably of a furniture panel.

2. Use according to Claim 1, **characterized in that** the alcoholic solution consists of an ethanol solution.

3. Use according to Claim 1 or 2, **characterized in that** the alcoholic solution consists of low-boiling special boiling point spirit and alcohol.

4. Use according to any of the preceding claims, **characterized in that** the alcoholic solution consists of low-boiling special boiling point spirit and ethanol.

5. Use according to any of the preceding claims, **characterized in that** the white oil consists of a medical or a technical white oil.

## Revendications

1. Utilisation d'un agent anti-adhérent liquide, contenant une huile blanche comme fluide de support et une solution alcoolique, à appliquer sur la zone de bordure d'une plaque dotée ou à doter d'un revêtement au moyen d'un adhésif ou d'une colle, de préférence, une plaque de meuble.

2. Utilisation selon la revendication 1, **caractérisée en ce que** la solution alcoolique consiste en une solution d'éthanol.

3. Utilisation selon la revendication 1 ou 2, **caractérisée en ce que** la solution alcoolique consiste en essences spéciales à bas point d'ébullition et en alcool.

4. Utilisation selon l'une des revendications précédentes, **caractérisée en ce que** la solution alcoolique consiste en essences spéciales à bas point d'ébullition et en éthanol.

5. Utilisation selon l'une des revendications précédentes, **caractérisée en ce que** l'huile blanche consiste en une huile blanche médicale ou technique.
